# EUROPEAN PATENT APPLICATION

(11) **EP 4 513 086 A1**
(43) Date of publication of application: **26.02.2025**
(21) Application number: 23791832.1
(22) Date of filing: 17.04.2023
(51) Int. Cl.: F23N 1/00, F23N 5/26, G01F 3/22, G05D 16/06

(54) **PRESSURE REGULATOR**

(30) Priority: 18.04.2022 JP 2022067997
(71) Applicant: Panasonic Intellectual Property Management Co., Ltd., Kadoma-shi, Osaka 571-0057 (JP)
(72) Inventor: YASUDA, Kenji, Osaka 571-0057 (JP)
(74) Representative: SSM Sandmair
(86) International application number: PCT/JP2023/015351
(87) International publication number: WO 2023/204184

(57) **Abstract**

A pressure regulator (15A to 15C) according to the present invention includes: a diaphragm (1) that receives pressure of gas at one side thereof and receives pressure of an atmosphere at the other side thereof; a valve (5) that reduces the pressure of the gas, which is supplied from a gas container, in accordance with a position of the diaphragm (1) and supplies the gas to gas equipment; a flowmeter (7) that measures a flow rate of the gas whose pressure has been reduced by the valve (5); and a remaining amount estimator (9) that calculates a remaining amount of gas in the gas container based on the flow rate measured by the flowmeter (7) and a preset amount of gas in the gas container.

## Description

### Technical Field

The present invention relates to a pressure regulator which aims to improve the convenience of the use of gas.

### Background Art

When gas is taken out from a high-pressure gas container and then used by gas equipment, a pressure regulator is conventionally used. For example, the pressure regulator is connected to the high-pressure gas container, and a gas meter having a safety function is connected to the pressure regulator. Then, the gas is supplied to the gas equipment. Thus, the pressure of the gas from the high-pressure gas container is reduced by the pressure regulator (see PTL 1, for example).

### Citation List

### Patent Literature

PTL 1: Japanese Laid-Open Patent Application Publication No. 4-244506

### Summary of Invention

### Technical Problem

However, in a use form in which the gas equipment is directly connected to the pressure regulator, everyday gas consumption amounts cannot be properly recognized. Such use form is often used especially in countries other than Japan. In many countries that use LP gas, the LP gas is purchased in units of a gas container. Therefore, it is unnecessary to measure the amount of use by the gas meter, and thus, the gas meter is not provided in many cases.

Moreover, in the above use form, after the gas in the gas container runs out, a new gas container that is full of gas is ordered in many cases. Therefore, a user (or a consumer) cannot use the gas equipment until the new gas container is delivered.

The present invention was made to solve the above conventional problems, and an object of the present invention is to provide a pressure regulator having a detecting function of detecting a remaining amount of gas in a gas container.

### Solution to Problem

To solve the above conventional problems, a pressure regulator of the present invention includes: a diaphragm that receives pressure of gas at one side thereof and receives pressure of an atmosphere at the other side thereof; a valve that reduces the pressure of the gas, which is supplied from a gas container, in accordance with a position of the diaphragm and supplies the gas to gas equipment; a flowmeter that measures a flow rate of the gas whose pressure has been reduced by the valve; and a remaining amount estimator that calculates a remaining amount of gas in the gas container based on the flow rate measured by the flowmeter and a preset amount of gas in the gas container.

Thus, the gas remaining amount detection suitable for the use of the gas equipment by the high-pressure gas container can be performed without using a gas meter having a measuring function.

The above object, other objects, features, and advantages of the present invention will be made clear by the following detailed explanation of preferred embodiments with reference to the attached drawings.

### Advantageous Effects of Invention

According to the pressure regulator of the present invention, it is possible to avoid constructing a new system, such as adding a gas meter having a measuring function, from a use environment in which gas equipment is used by a conventional high-pressure gas container. Thus, only by replacing a conventionally used pressure regulator, the remaining amount of gas in the gas container can be detected, and therefore, the convenience for the user can be improved.

### Brief Description of Drawings

FIG. 1 is a schematic sectional view of a pressure regulator according to Embodiment 1 of the present invention.
FIG. 2 is a schematic sectional view of the pressure regulator according to Embodiment 2 of the present invention.
FIG. 3 is a schematic sectional view of the pressure regulator according to Embodiment 3 of the present invention.
FIG. 4 is a system diagram of the pressure regulator according to Embodiment 3 of the present invention.

### Description of Embodiments

A pressure regulator of the present disclosure is a pressure regulator that reduces pressure, which is supplied from a gas container, to pressure to be used by gas equipment, and the pressure regulator includes: a diaphragm that receives pressure of gas at one side thereof and receives pressure of an atmosphere at the other side thereof; a valve that reduces the pressure of the gas, which is supplied from the gas container, in accordance with a position of the diaphragm and supplies the gas to the gas equipment; a flowmeter that measures a flow rate of the gas whose pressure has been reduced by the valve; and a remaining amount estimator that calculates a remaining amount of gas in the gas container based on the flow rate measured by the flowmeter and a preset amount of gas in the gas container (first disclosed configuration). Thus, only by replacing a conventionally used pressure regulator, the remaining amount of gas in the gas container can be detected without additionally providing a gas meter having a measuring function.

The pressure regulator having the above configuration includes a gas container replacement operator that is operated when the gas container has been replaced with a new gas container that is full of gas, wherein when the gas container replacement operator is operated, the remaining amount estimator resets the remaining amount of gas to a preset amount of gas in the gas container (second disclosed configuration). Thus, remaining amount updating work which needs to be performed each time the gas container is replaced can be easily performed.

The pressure regulator having the above configuration (first or second disclosed configuration) includes a wireless communicator that transmits and receives information to and from an outside, wherein the wireless communicator forwards a determination result of the remaining amount determiner to the outside (third disclosed configuration). Thus, even when a user is not close to the pressure regulator, the user can remotely recognize the remaining amount of gas by a mobile terminal or the like.

Hereinafter, typical embodiments of the present disclosure will be described with reference to the drawings. However, detailed explanations beyond necessity may be omitted. For example, detailed explanations regarding well-known matters and repetition of the same explanation regarding the substantially same components may be omitted. This is to prevent the following explanations from becoming redundant beyond necessity and to facilitate understanding of persons skilled in the art.

The attached drawings and the following description are provided to help skilled persons fully understand the present disclosure and are not intended to limit the subject matters recited in the claims.

### Embodiment 1

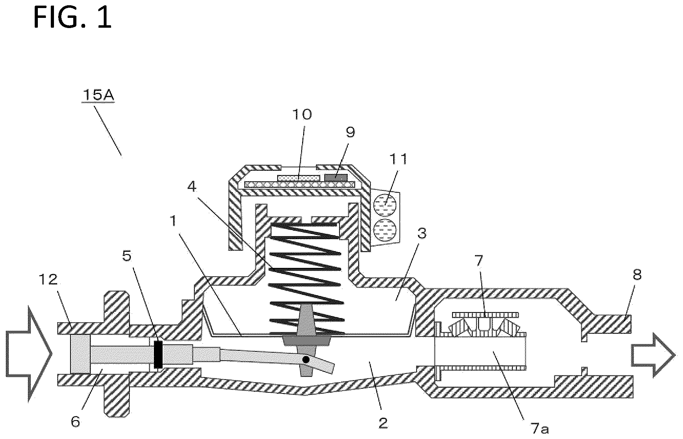

FIG. 1 is a diagram schematically showing a cross section structure of a pressure regulator 15A according to Embodiment 1 of the present disclosure.

The pressure regulator 16A shown in FIG. 1 includes a regulator main body, a diaphragm 1, an adjusting spring 4, a valve 5, a flowmeter 7, a remaining amount estimator 9, a display 10, a battery 11, and the like. Block arrows in the drawings indicate a gas flow direction. In the following description, the terms "upstream" and "downstream" are used based on the gas flow direction.

In FIG. 1, the entire regulator main body has a tubular shape. A downstream portion of the regulator main body is a tubular reduced-pressure outlet attaching portion 8, and an upstream portion thereof is a tubular high-pressure inlet attaching portion 12. The diaphragm 1 is located between the reduced-pressure outlet attaching portion 8 and the high-pressure inlet attaching portion 12 so as to extend along the gas flow direction. The reduced-pressure outlet attaching portion 8 is an attaching portion by which gas equipment is connected to the pressure regulator 15A. The high-pressure inlet attaching portion 12 is an attaching portion by which a gas supply source (gas container) is connected to the pressure regulator 15A.

A gas passage through which gas flows is located inside the regulator main body. A region of the gas passage along the diaphragm 1 (i.e., a region of the gas passage whose side surface is the diaphragm 1) is a reduced-pressure side 2 (reduced-pressure region 2). Moreover, when viewed from the diaphragm 1, a region outside the gas passage (i.e., a region at an upper side of the gas passage in FIG. 1) is an atmospheric-pressure side 3 (atmospheric-pressure region 3). When viewed from the reduced-pressure side 2, an upstream region of the gas passage (i.e., a region at a left side in FIG. 1) is a high-pressure side 6 (high-pressure region 6).

The valve 5 is located between the high-pressure side 6 and the reduced-pressure side 2 in the regulator main body. Therefore, the regions that are the high-pressure side 6 and the reduced-pressure side 2 in the gas passage are defined by the valve 5. Moreover, as described above, the diaphragm 1 is located between the reduced-pressure side 2 and the atmospheric-pressure side 3. Therefore, the regions that are the reduced-pressure side 2 (a part of the gas passage) and the atmospheric-pressure side 3 (an outside of the gas passage) are defined by the diaphragm 1.

The diaphragm 1 is a membrane-shaped diaphragm that separates the reduced-pressure side 2 and the atmospheric-pressure side 3 while securing airtightness. The adjusting spring 4 extends in a direction perpendicular to (or intersecting with) the gas passage (or the gas flow direction) and is located at the atmospheric-pressure side 3 that is an outside of the diaphragm 1. Therefore, the diaphragm 1 is pushed down by the adjusting spring 4 from the atmospheric-pressure side 3 toward the reduced-pressure side 2.

In the regulator main body, the flowmeter 7 is located at a position that is further downstream of the gas passage (reduced-pressure side 2) when viewed from the diaphragm 1. The flowmeter 7 measures the flow rate of the gas flowing through a tubular channel portion 7a. The flowmeter 7 is attached such that the channel portion 7a is located in the middle of the gas passage from the reduced-pressure side 2 to the reduced-pressure outlet attaching portion 8 in the regulator main body. Therefore, the gas flowing from the reduced-pressure outlet attaching portion 8 into the gas passage in the regulator main body flows through the channel portion 7a, and thus, the flow rate of the gas is measured.

A specific configuration of the flowmeter 7 is not especially limited, and various known configurations may be suitably used. A typical configuration of the flowmeter 7 is, for example, an ultrasonic measurement system or a thermal measurement system.

An opening degree of the valve 5 is adjusted in accordance with the position of the diaphragm 1 such that the pressure of the gas is reduced. Specifically, for example, the diaphragm 1 and the valve 5 are connected to each other by a coupler, and the position of the valve 5 is changed toward the upstream side or the downstream side in accordance with the position of the diaphragm 1 that has been pushed down. Thus, the opening degree of the valve 5 is adjusted. Therefore, the valve 5 can adjust an inflow amount of gas flowing from the high-pressure side 6 to the reduced-pressure side 2 in the gas passage and stop the flow of the gas. Thus, the valve 5 can be regarded as a "gas inflow amount adjusting valve." The configuration of the valve 5 is not limited to this and may be a known configuration as long as the opening degree of the valve 5 can be adjusted in accordance with the position of the diaphragm 1 that has been pushed down.

As shown in FIG. 1, at the atmospheric-pressure side 3 constituting the regulator main body, one end of the adjusting spring 4 is in contact with the diaphragm 1, and the other end of the adjusting spring 4 is fixed by the regulator main body. Therefore, the diaphragm 1 is biased by the adjusting spring 4 toward the gas passage (i.e., toward the inside). In the present embodiment, the remaining amount estimator 9, the display 10, and the battery 11 are located outside the other end of the adjusting spring 4.

The remaining amount estimator 9 has a function of calculating the current remaining amount of gas in the gas container based on measurement data of the gas flow rate measured by the flowmeter 7 and a preset amount of gas in the gas container (not shown). A specific configuration of the remaining amount estimator 9 is not especially limited, and the remaining amount estimator 9 may be configured by known hardware and software.

The display 10 displays, for example, a result of the calculation by the remaining amount estimator 9. A specific configuration of the display 10 is not especially limited, and examples of the display 10 may include a liquid crystal panel and a light emitting element. Moreover, the display 10 may include an alarm that emits an alarm sound. Thus, especially, not only a visual notification but also an auditory notification is realized.

Operations of the pressure regulator 15A according to Embodiment 1 configured as above will be described below.

First, the gas supply source (gas container) of the gas that has been compressed at high pressure is connected to the high-pressure inlet attaching portion 12 through a pipe. Moreover, various pieces of gas equipment are connected to the reduced-pressure outlet attaching portion 8 through pipes. Then, when a main gas supply tap is opened, the gas flows through the valve 5 into the reduced-pressure side 2. When the gas is not consumed by the gas equipment, gas pressure at the reduced-pressure side 2 increases, and the diaphragm 1 is pushed up. When the diaphragm 1 is pushed up, the valve 5 coupled to the diaphragm 1 operates in a closing direction to stop the flow of the gas into the reduced-pressure side 2.

When the gas equipment starts consuming the gas, the gas pressure at the reduced-pressure side 2 decreases, and the diaphragm 1 is pushed down. When the diaphragm 1 is pushed down, the valve 5 coupled to the diaphragm 1 operates in an opening direction, and the amount of gas flowing into the reduced-pressure side 2 increases. When the consumption of the gas stops again, the diaphragm 1 is pushed up, and the valve 5 closes. Thus, the pressure at the reduced-pressure side 2 does not increase any more.

As above, the inflow amount of gas is adjusted by the valve 5 in accordance with the change in the pressure at the reduced-pressure side 2. Thus, the pressure at the reduced-pressure side 2 can be kept substantially constant. The flowmeter 7 mounted inside the regulator main body measures, every several seconds, the flow rate of the gas flowing out from the reduced-pressure outlet attaching portion 8, converts an instant flow rate of the gas flowing instantaneously into a numerical value, and transmits (outputs) its data to the remaining amount estimator 9 in real time.

The amount of gas in the gas container connected is preset in the remaining amount estimator 9. Based on the instant flow rate transmitted from the flowmeter 7, the remaining amount estimator 9 subtracts a gas use amount of gas consumed by the gas equipment from the preset amount of gas. Thus, the remaining amount estimator 9 calculates the current remaining amount of gas in the gas container. To visually inform the consumer of a calculation result of the remaining amount estimator 9, the display 10 displays the remaining amount of gas in the gas container.

As described above, in the pressure regulator 15A according to the present embodiment, the flowmeter 7 measures the instant flow rate of the gas of a portion after the reduced-pressure outlet attaching portion 8, and the remaining amount estimator 9 calculates the remaining amount of gas in the gas container and visually informs the consumer. Thus, before the gas in the gas container completely runs out, a new gas container that is full of gas can be ordered. As a result, it is possible to avoid a case where the gas equipment cannot be used since the gas has run out. Therefore, the convenience for consumers can be improved.

Based on the history of everyday gas use amounts and the remaining amount of gas, the remaining amount estimator 9 may calculate how many more days there are until the gas in the gas container runs out, and may inform the consumer. Thus, especially, since the consumer can expect when to make a next order of the gas, the convenience can be further improved.

### Embodiment 2

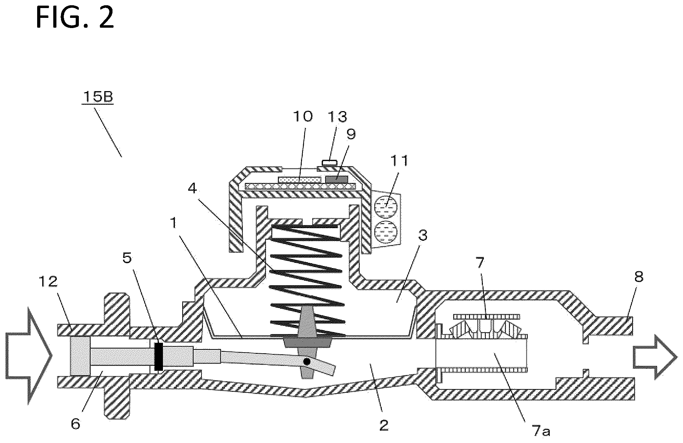

FIG. 2 is a diagram schematically showing a cross section structure of a pressure regulator 15B according to Embodiment 2 of the present disclosure. In FIG. 2, regarding the same members as the pressure regulator 15A described in Embodiment 1 and components having the same functions as the pressure regulator 15A described in Embodiment 1, the same reference signs are used, and detailed explanations are omitted. Therefore, in the present embodiment, different matters from the configuration described in Embodiment 1 will be mainly described.

The pressure regulator 15B according to the present embodiment is different in configuration from the pressure regulator 15A according to Embodiment 1 in that a gas container replacement operator 13 is included.

In the present embodiment, the gas container replacement operator 13 is located in the vicinity of the display 10. The gas container replacement operator 13 is an operator that is operated by the consumer to set, in the remaining amount estimator 9, information indicating that the gas container has been replaced.

A specific configuration of the gas container replacement operator 13 is not especially limited. The gas container replacement operator 13 may transmit (output) an operation signal to the remaining amount estimator 9 and may be configured by known hardware and software. For example, the gas container replacement operator 13 may include: a control circuit that can transmit (output) the operation signal to the remaining amount estimator 9; and a known switch by which an operation command is input to the control circuit.

Operations of the pressure regulator 15B according to Embodiment 2 configured as above will be described below.

Basic operations of the pressure regulator 15B are the same as those of the pressure regulator 15A according to Embodiment 1 described above. Herein, as described above, the gas container replacement operator 13 can transmit (output) the operation signal to the remaining amount estimator 9. For example, as described above, the gas container replacement operator 13 includes the switch, and when the switch is turned on, the gas container replacement operator 13 transmits the operation signal.

Then, when the gas container that has been connected is replaced with a new gas container that is full of gas, the consumer (or a replacement worker, for example) operates the gas container replacement operator 13 (i.e., turns on the switch). Thus, a gas container replacement signal (operation signal) transmitted from the gas container replacement operator 13 is output to the remaining amount estimator 9, and the information indicating that the gas container has been replaced with a new one is set in the remaining amount estimator 9.

Because of the setting of the replacement of the gas container, the remaining amount estimator 9 resets the remaining amount of gas in the gas container, which has been estimated, to the preset amount of gas in the gas container. The remaining amount estimator 9 subtracts the gas use amount, which is measured by the flowmeter 7, from this reset remaining amount of gas to calculate the current remaining amount of gas in the gas container.

As described above, in the pressure regulator 15B according to the present embodiment, the consumer can operate the gas container replacement operator 13 to reset information which is in the remaining amount estimator 9 and relates to the estimated remaining amount of gas in the gas container. Thus, remaining amount information updating work which needs to be performed each time the gas container is replaced can be easily performed.

### Embodiment 3

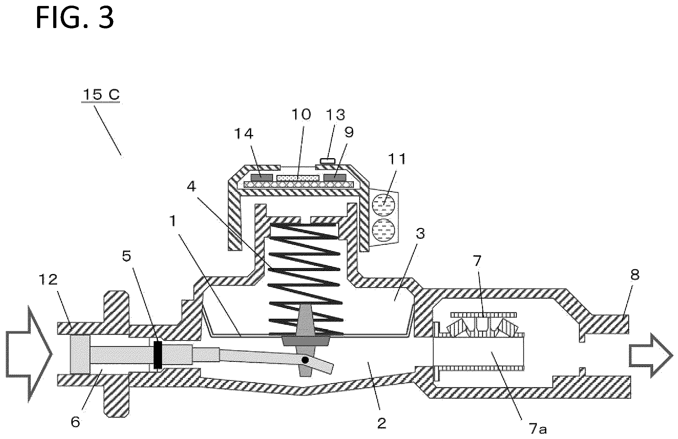

FIG. 3 is a diagram schematically showing a cross section structure of a pressure regulator 15C according to Embodiment 3 of the present disclosure. In FIG. 3, regarding the same members as the pressure regulator 15A described in Embodiment 1 or the pressure regulator 15B described in Embodiment 2 and components having the same functions as the pressure regulator 15A described in Embodiment 1 or the pressure regulator 15B described in Embodiment 2, the same reference signs are used, and detailed explanations are omitted. Therefore, in the present embodiment, different matters from the configuration described in Embodiment 1 or 2 will be mainly described.

A basic configuration of the pressure regulator 15C according to the present embodiment is the same as that of the pressure regulator 15B according to Embodiment 2. However, the pressure regulator 15C is different from the pressure regulator 15B in that a wireless communicator 14 is included.

The wireless communicator 14 realizes bidirectional wireless communication between the pressure regulator 15C and external communication equipment. A specific configuration of the wireless communicator 14 is not especially limited, and a known communication apparatus can be suitably used. Information communicated by the wireless communicator 14 is not especially limited and may be, for example, a control state of the pressure regulator 15C, such as a calculation result of the remaining amount estimator 9 or an operating state of the gas container replacement operator 13.

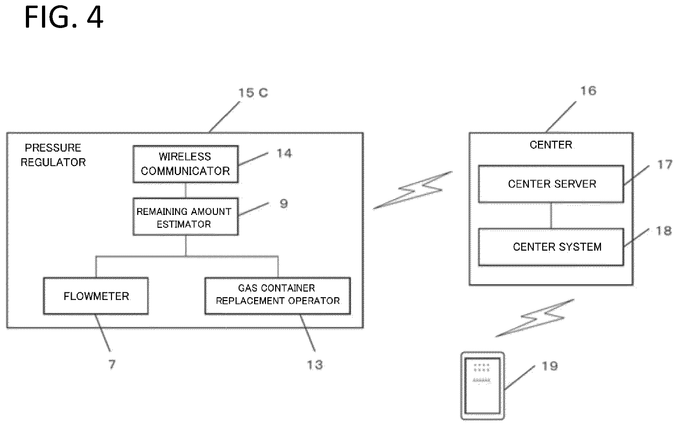

FIG. 4 is a block diagram showing one typical example of a communication system including the pressure regulator 15C according to Embodiment 3 of the present disclosure and external communication equipment (or information terminals having a communication function). In the example shown in FIG. 4, a center 16 and a smartphone 19 are shown as the external communication equipment.

Moreover, in FIG. 4, the pressure regulator 15C is shown as a functional configuration including the flowmeter 7, the remaining amount estimator 9, and the wireless communicator 14. The remaining amount estimator 9 is connected to the flowmeter 7 and the gas container replacement operator 13. As described above, the remaining amount estimator 9 calculates the remaining amount of gas in the gas container based on the flow rate measured by the flowmeter 7 and the preset amount of gas in the gas container.

The remaining amount estimator 9 is also connected to the wireless communicator 14, can communicate with the center 16, and can also communicate with the smartphone 19 through the center 16. The specific communication equipment is not especially limited, and the external communication equipment may be known communication equipment other than the center 16 and the smartphone 19. Examples of such known communication equipment include a personal computer having a communication function, a home display terminal, and a remote home electric appliance control system.

The center 16 includes a center server 17 and a center system 18. The center server 17 stores information transmitted from the wireless communicator 14 or information transmitted from the smartphone 19 of the consumer. The center system 18 processes the information stored in the center server 17. A specific configuration of the center 16 is not especially limited, and for example, a known server system can be suitably used.

Operations of the pressure regulator 15C according to Embodiment 3 configured as above will be described below.

Basic operations of the pressure regulator 15C are the same as those of the pressure regulator 15A according to Embodiment 1 described above.

In the present embodiment, first, information of the remaining amount estimator 9 is transmitted to the center 16 by the wireless communicator 14. In the center 16, the information of the remaining amount estimator 9 is stored in the center server 17. Information to be transmitted to the smartphone 19 is processed by the center system 18 based on the information stored in the center server 17. The center 16 transmits the processed information to the smartphone 19. Thus, the smartphone 19 displays the information of the remaining amount estimator 9, and therefore, the consumer can confirm the remaining amount of gas in the gas container.

Next, when the consumer has replaced the gas container with a new gas container that is full of gas, the consumer may want to control the pressure regulator 15C by the smartphone 19 or may confirm the state of the pressure regulator 15C by the smartphone 19.

In such a case, the consumer operates the smartphone 19 to transmit control information to the center 16. One example of such case is a case where after the gas container is replaced, the consumer wants to remotely reset the remaining amount of gas without directly operating the gas container replacement operator 13 included in the pressure regulator 15C.

The control information transmitted to the center 16 is stored in the center server 17. Based on the stored control information, the center system 18 performs processing with respect to the information to be transmitted to the pressure regulator 15C. The center 16 transmits the processed determination information to the wireless communicator 14 of the pressure regulator 15C. Thus, a control instruction is transmitted through the wireless communicator 14 to the remaining amount estimator 9.

The communication system shown in FIG. 4 may be configured such that the wireless communicator 14 and the smartphone 19 (or another communication equipment) are directly and wirelessly connected to each other and therefore can bidirectionally communicate with each other without through the center 16. Thus, the notification regarding the state of the pressure regulator 15C can be directly confirmed by the smartphone 19 or the like, and the pressure regulator 15C can be directly controlled by the smartphone 19 or the like.

As described above, in the pressure regulator 15C according to the present embodiment, the wireless communicator 14 can transmit the state of the pressure regulator 15C to the external communication equipment (terminal, etc.) or receive the control instruction from the external communication equipment. Thus, even when the consumer is away from the pressure regulator 15C, the consumer can notice, by the communication equipment such as the smartphone 19 carried by the consumer, the notification indicating that the remaining amount of gas in the gas container has decreased, or the gas container has been replaced. As a result, the convenience for the consumer can be improved.

Moreover, in the pressure regulator 15C according to the present embodiment, the center system 18 can automatically order a new gas container based on gas remaining amount information from the remaining amount estimator 9. Or, to urge the consumer to order a new gas container, the center system 18 can transmit the notification to the smartphone 19 based on the gas remaining amount information. Thus, the convenience of use of the gas equipment can be improved.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

As above, the pressure regulator according to the present disclosure can improve the convenience of use of gas equipment without providing a gas meter having a measuring function or introducing additional equipment. Therefore, the pressure regulator according to the present disclosure is also applicable to regions, such as emerging countries, where energy infrastructure is under development.

### Reference Signs List

- 1: diaphragm
- 2: reduced-pressure side
- 3: atmospheric-pressure side
- 4: adjusting spring
- 5: valve
- 6: high-pressure side
- 7: flowmeter
- 8: reduced-pressure outlet attaching portion
- 9: remaining amount estimator
- 10: display
- 11: battery
- 12: high-pressure inlet attaching portion
- 13: gas container replacement operator
- 14: wireless communicator
- 15A to 15C: pressure regulator
- 16: center
- 17: center server
- 18: center system
- 19: smartphone

## Claims

1. A pressure regulator that reduces pressure, which is supplied from a gas container, to pressure to be used by gas equipment,
the pressure regulator comprising:
a diaphragm that receives pressure of gas at one side thereof and receives pressure of an atmosphere at the other side thereof;
a valve that reduces the pressure of the gas, which is supplied from the gas container, in accordance with a position of the diaphragm and supplies the gas to the gas equipment;
a flowmeter that measures a flow rate of the gas whose pressure has been reduced by the valve; and
a remaining amount estimator that calculates a remaining amount of gas in the gas container based on the flow rate measured by the flowmeter and a preset amount of gas in the gas container.

2. The pressure regulator according to claim 1, comprising a gas container replacement operator that is operated when the gas container has been replaced with a new gas container that is full of gas, wherein
when the gas container replacement operator is operated, the remaining amount estimator resets the remaining amount of gas to a preset amount of gas in the gas container.

3. The pressure regulator according to claim 1 or 2, comprising a wireless communicator that transmits and receives information to and from an outside, wherein
the wireless communicator forwards a result of the remaining amount estimator to the outside.
